(19) Europäisches Patentamt
European Patent Office
Office européen des brevets

(11) **EP 1 207 139 B1**

(12) **EUROPEAN PATENT SPECIFICATION**

(45) Date of publication and mention
of the grant of the patent:
**22.06.2011   Bulletin 2011/25**

(51) Int Cl.:
**C03B 37/014** *(2006.01)*      **C03B 19/14** *(2006.01)*

(21) Application number: **01250398.3**

(22) Date of filing: **13.11.2001**

(54) **Method for sintering a porous-glass preform for an optical fibre**

VERFAHREN ZUM SINTERN EINER VORFORM AUS PORÖSEM GLAS FÜR OPTISCHE FASERN

Procédé de fabrication d'une préforme en verre poreux pour fibres optiques

(84) Designated Contracting States:
**DE FR GB**

(30) Priority: **16.11.2000   JP 2000349583**

(43) Date of publication of application:
**22.05.2002   Bulletin 2002/21**

(73) Proprietor: **Shin-Etsu Chemical Co., Ltd.
Chiyoda-ku,
Tokyo (JP)**

(72) Inventors:
 • **Kamio, Takeshi
   Annaka-shi,
   Gunma-ken (JP)**
 • **Yoshida, Makoto
   Annaka-shi,
   Gunma-ken (JP)**

(74) Representative: **Pfenning, Meinig & Partner GbR
Patent- und Rechtsanwälte
Theresienhöhe 13
80339 München (DE)**

(56) References cited:
   **EP-A- 0 416 614     EP-A- 1 035 082
   US-A- 5 106 401**

 • **PATENT ABSTRACTS OF JAPAN vol. 2000, no. 12, 3 January 2001 (2001-01-03) -& JP 2000 256020 A (SHIN ETSU CHEM CO LTD), 19 September 2000 (2000-09-19)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a method for sintering a porous-glass material, a method for manufacturing a preform and an optical fiber, and porous-glass material. More particularly, the present invention relates to a method for sintering a porous-glass material to manufacture a preform having a good eccentricity of a core inside the preform.

2. Description of the Related Art

A porous-glass material, which is a base material of an optical fiber used for communication, is usually manufactured by accumulating glass particles on a starting rod by a method such as VAD (Vapor-phase Axial Deposition) method, or OCVD (Outside Chemical Vapor Deposition) method. Hydrolyzing a raw material gas with flame generates the glass particles to be accumulated on the starting rod.

A glass base material is manufactured by dehydrating, sintering, and vitrifying the porous-glass material. The porous-glass material is rotated and descended inside an electric furnace, the inside of which is filled with dehydration gas and inert gas. Thus, the porous-glass material is dehydrated, sintered, and vitrified by the electric furnace to be a glass base Shin-Etsu Chemical Co., Ltd. material. A preform is formed by elongating a glass base material to a desired outer diameter. An optical fiber is manufactured by drawing the preform into a fiber shape in a high temperature.

The dehydrating, sintering, and vitrifying process of the porous-glass material is usually performed by rotating and heating the porous-glass material in an atmosphere of mixed gas that contains dehydration gas and inert gas using a vertical type electric furnace. Usually, the electric furnace sinters the porous-glass material by holding the top part of the porous-glass material with a rotation mechanism and by rotating and lowering the porous-glass material inside the electric furnace. A corresponding state of the art method is described in the document EP 1 035 082 A1.

The length from the position of the porous-glass material held by the rotation mechanism of the electric furnace to the position of the bottom of the porous-glass material is extremely long. Therefore, if the rotation mechanism holds the porous-glass material such that the holding position is deviated slightly from the center of gravity of the porous-glass material, the porous-glass material rotates and swings to one specific direction. It is difficult to prevent this rotation and swinging phenomenon perfectly.

If the rotation and swinging phenomenon occurs during the sintering process, the speed of vitrification inside the porous-glass material becomes non-uniform in the radial direction. Thus, the eccentricity of a core in the porous-glass material increases. The eccentricity of a core causes a serious defect in an optical fiber product such that connection loss of an optical fiber product increases.

When this eccentricity of a core occurs, there is a high possibility of causing a phenomenon such that the cross section of the manufactured glass base material is not a true circular shape. This phenomenon causes a serious defect in the optical characteristic of a preform manufactured from the glass base material and an optical fiber manufactured from the preform. This phenomenon also leads to the reduction of the yield factor of manufacturing a preform and an optical fiber.

SUMMARY OF THE INVENTION

Therefore, it is an object of the present invention to provide a method for sintering a porous-glass material, a method for manufacturing a preform and an optical fiber, and a porous-glass material, which is capable of overcoming the above drawbacks accompanying the conventional art. The above and other objects can be achieved by combinations described in the independent claims. The dependent claims define further advantageous and exemplary combinations of the present invention.

According to the first aspect of the present invention, a method for sintering a porous-glass material to form a glass base material, which is a base material for an optical fiber, comprises: preparing a ring heater having an opening, through which the porous-glass material passes, for heating the porous-glass material; selecting the porous-glass material having an outer diameter (d) within a predetermined range, the predetermined range being determined based on an inner diameter (D) of the opening of the ring heater and on a vertical length (L) of the ring heater; and heating the porous-glass material in an atmosphere of dehydration gas and inert gas with the ring heater.

The predetermined range of the outer diameter (d) of the porous-glass material is determined so that $0.5 \times D \leqq d \leqq 0.9 \times D$. The predetermined range of the outer diameter of the porous-glass material may be such that substantially $0.6 \times D \leqq d \leqq 0.8 \times D$. The predetermined range of the outer diameter (d) of the porous-glass material is furthermore determined so that $0.5 \times L \leqq d \leqq 0.9 \times L$.

The predetermined range of the outer diameter (d) of the porous-glass material may be determined so that an eccentricity of a core inside the glass base material manufactured by sintering the porous-glass material becomes substantially 0.4 % or below. The heating heats the porous-glass material in a muffle tube that is provided inside the opening of the ring heater so that a part of the furnace is surrounded by the ring heater. Below, the terms "muffle tube" and "furnace" are used synonymously.

According to the second aspect of the present invention, a method for manufacturing a preform, which is a base material of an optical fiber, comprises: preparing a ring heater having an opening, through which a porous-glass material, which is a base material of the preform, passes, for heating the porous-glass material; forming the porous-glass material having an outer diameter (d) within a predetermined range, the predetermined range being determined based on an inner diameter (D) of the opening of the ring heater and on a vertical length (L) of the ring heater; sintering the porous-glass material in an atmosphere of dehydration gas and inert gas with the ring heater; and elongating the sintered porous-glass material to form the preform.

The predetermined range of the outer diameter (d) of the porous-glass material is determined so that $0.5 \times D \leqq d \leqq 0.9 \times D$. The predetermined range of the outer diameter of the porous-glass material may be such that substantially $0.6 \times D \leqq d \leqq 0.8 \times D$. The predetermined range of the outer diameter (d) of the porous-glass material is furthermore determined so that $0.5 \times L \leqq d \leqq 0.9 \times L$.

The predetermined range of the outer diameter (d) of the porous-glass material may be determined so that an eccentricity of a core inside the sintered porous-glass material becomes substantially 0.4 % or below. The heating heats the porous-glass material in a furnace that is provided inside the opening of the ring heater so that a part of the furnace is surrounded by the ring heater.

According to the third aspect of the present invention, a method for manufacturing an optical fiber, comprises: preparing a ring heater having an opening, through which a porous-glass material, which is a base material of the optical fiber, passes, for heating the porous-glass material; forming the porous-glass material having an outer diameter (d) within a predetermined range, the predetermined range being determined based on an inner diameter (D) of the opening of the ring heater and on a vertical length (L) of the ring heater; sintering the porous-glass material in an atmosphere of dehydration gas and inert gas with the ring heater; and elongating the sintered porous-glass material to form a preform; and drawing the preform to form the optical fiber.

The predetermined range of the outer diameter (d) of the porous-glass material is determined so that $0.5 \times D \leqq d \leqq 0.9 \times D$ and $0.5 \times L \leqq d \leqq 0.9 \times L$. The predetermined range of the outer diameter of the porous-glass material may be such that substantially $0.6 \times D \leqq d \leqq 0.8 \times D$.

The summary of the invention does not necessarily describe all necessary features of the present invention. The present invention may also be a subcombination of the features described above. The above and other features and advantages of the present invention will become more apparent from the following description of the embodiments taken in conjunction with the accompanying drawings.

BRIEF DESCRIPTION OF THE DRAWINGS

Fig. 1 shows a configuration of a porous-glass material sintering apparatus 10 used for an embodiment of the present invention.
Fig. 2 shows an enlarged view of the part of the porous-glass material sintering apparatus 10.
Fig. 3 shows a flowchart for manufacturing a glass base material of the present embodiment.
Fig. 4 shows a measuring result of the eccentricity for each of EXAMPLE 1, EXAMPLE 2, EXAMPLE 3, and COMPARATIVE EXAMPLE 1.
Fig. 5 shows the relationship between the eccentricity of a core and a ratio (d/D) for each of EXAMPLE 1, EXAMPLE 2, EXAMPLE 3, and COMPARATIVE EXAMPLE 1.

DETAILED DESCRIPTION OF THE INVENTION

The invention will now be described based on the preferred embodiments, which do not intend to limit the scope of the present invention, but exemplify the invention. All of the features and the combinations thereof described in the embodiments are not necessarily essential to the invention.

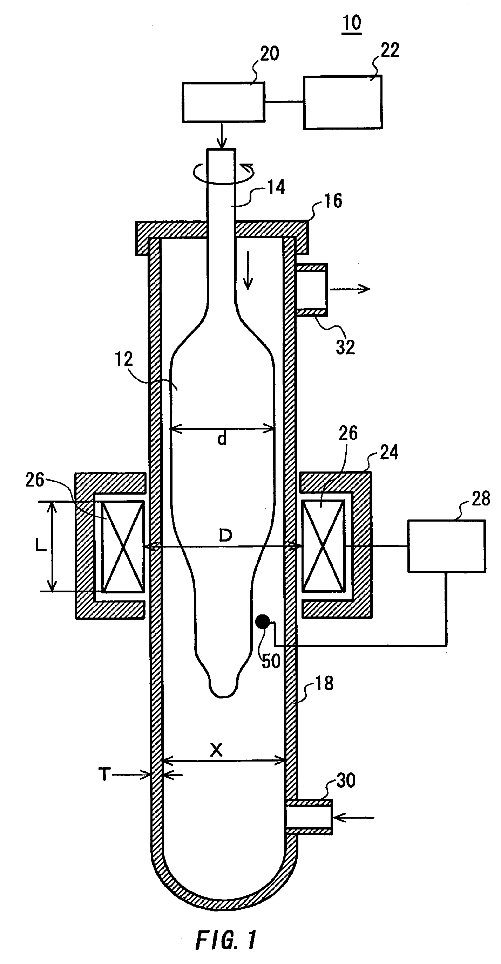

Fig. 1 shows a configuration of a porous-glass material sintering apparatus 10 used for an embodiment of the present invention. A porous-glass material sintering apparatus 10 sinters a porous-glass material by heating the porous-glass material in an atmosphere of dehydration gas and inert gas.

The porous-glass material sintering apparatus 10 comprises a furnace 18, a motor 20, a descending speed controller 22, a heating unit 24, and a temperature controller 28.

The porous-glass material 12 is supplied inside the cylindrical-shaped furnace 18 and descended to the bottom of the furnace 18. The motor 20 rotates porous-glass material 12 around the axis rod 14, to which an upper end of the porous-glass material 12 is connected, and lowers the vertical position of the porous-glass material 12 into the bottom part of the furnace 18. The descending speed controller 22 is connected to the motor 20 and controls a descending speed of the porous-glass material 12 to the bottom part of the furnace 18.

The heating unit 24 is provided around the sidewall of the furnace 18 to heat the porous-glass material 12 through the sidewall of the furnace 18. The heating unit 24 has a heater 26. The heater 26 is a ring heater that includes an opening. The opening of the heater 26 has an inner diameter (D) as shown in Fig. 1. The furnace 18 is inserted inside the opening of the heater 26. Thus, the heating unit 24 surrounds the sidewall of the furnace 18. The heater 26 has a predetermined vertical length (L) as shown in Fig. 1. Therefore, the heater 26 heats the porous-glass material 12 by heating a part of the sidewall of the furnace 18 as shown in Fig. 1. Thus, the heater 26 has a configuration such that the porous-glass material 12 passes through the opening of the heater 26.

A temperature controller 28 is connected to the heating unit 24. Also, the temperature sensor 50 provided inside the furnace 18 is connected to the temperature controller 28. Thus, the temperature controller 28 controls a temperature of the heater 26 based on the temperature inside the furnace 18 detected by the sensor 50.

The furnace 18 has a gas-introducing pipe 30 connected to a sidewall of the bottom part of the furnace 18. Dehydration gas and inert gas are introduced into the furnace 18 through the gas-introducing pipe 30.

The furnace 18 further has a cover 16 provided on the top end of the furnace 18 to close the opening formed on a top of the furnace 18. Furthermore, the furnace 18 has a hemispherical bottom wall on a bottom end of the furnace 18. Therefore, dehydration gas and inert gas introduced into the furnace 18 from the gas-introducing pipe 30 is enclosed inside the furnace 18.

An opening is provided at the central part of the cover 16 so that the axis rod 14, to which the upper end of the porous-glass material 12 is connected, can pass through the opening of the cover 16.

The furnace 18 further has an exhaust pipe 32 connected to a sidewall closed to the top part of the furnace 18. The exhaust pipe 32 exhausts the gas generated inside the furnace 18.

Because the porous-glass material sintering apparatus 10 has the configuration explained above, the porous-glass material sintering apparatus 10 can heat the porous-glass material 12 in an atmosphere of dehydration gas and inert gas with a heater 26 to sinter the porous-glass material 12.

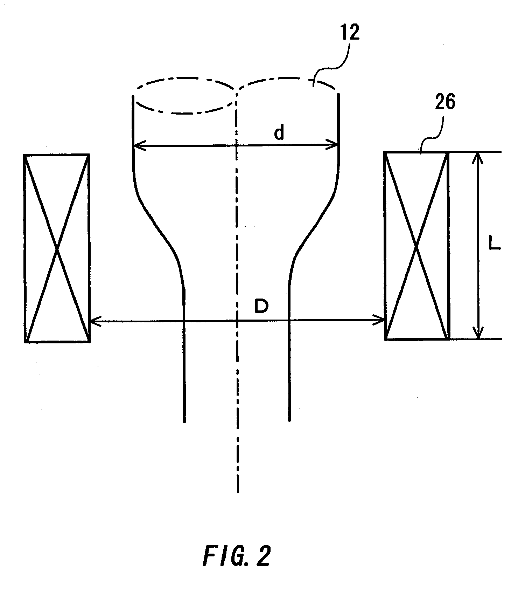

Fig. 2 shows an enlarged view of the part of the porous-glass material sintering apparatus 10. To simplify the explanation, only the heater 26 and the porous-glass material 12 are shown in Fig. 2, and the other elements of the porous-glass material sintering apparatus 10 are abbreviated from Fig. 2.

To sinter a porous-glass material 12 to form a glass base material, first, the porous-glass material having an outer diameter, which is shown by "d" in Fig. 2, within a predetermined range is selected. Here, "d" shows the outer diameter of the thick part of the porous-glass material 12, as shown in Fig. 1. The predetermined range of the outer diameter (d) of the porous-glass material is determined based on an inner diameter of the opening of the ring heater 26, which is shown by "D" in Fig. 2.

The predetermined range of the outer diameter (d) of the porous-glass material 12 is preferably substantially $0.5 \times D \leqq d \leqq 0.9 \times D$. More preferably, the predetermined range of the outer diameter (d) of the porous-glass material 12 is substantially $0.6 \times D \leqq d \leqq 0.8 \times D$.

If the outer diameter (d) of the porous-glass material 12 is smaller than $d = 0.5 \times D$, then the porous-glass material 12 is sintered inside the furnace 18 where the temperature gradient in the radial direction of the furnace 18 is large. Therefore, if the porous-glass material 12 swings and rotates slightly inside the furnace 18, the temperature difference in the radial direction of the porous-glass material 12 becomes large, Thus, the porous-glass material 12 is vitrified not uniformly in the radial direction, and therefore the eccentricity of the core inside the glass base material increases.

Therefore, the eccentricity of a core inside the glass base material manufactured from the porous-glass material 12 having an outer diameter (d) smaller than $d = 0.5 \times D$ becomes larger than that of the glass base material manufactured from the porous-glass material 12 having an outer diameter (d), which is substantially $0.5 \times D \leqq d \leqq 0.9 \times D$. The eccentricity of a core causes a serious defect in the glass base material product so that the manufactured glass base material cannot be used as a product.

On the other hand, if the outer diameter (d) of the porous-glass material 12 is larger than $d = 0.9 \times D$, the porous-glass material 12 may contact with the sidewall of the furnace 18 and may be damaged if the porous-glass material 12 swings and rotates during the sintering process of the porous-glass material 12.

Therefore, the porous-glass material 12 is selected such that the porous-glass material 12 has an outer diameter (d), which is within a predetermined range substantially $0.5 \times D \leqq d \leqq 0.9 \times D$.

The present embodiment sinters the porous-glass material 12 having an outer diameter (d) within the predetermined range substantially $0.5 \times D \leqq d \leqq 0.9 \times D$. Therefore, even if the porous-glass material 12 swings and rotates slightly inside the furnace 18, the temperature difference in the radial direction of the porous-glass material 12 is small. Thus, the porous-glass material 12 is vitrified uniformly in the radial direction, and therefore the eccentricity of the core inside the glass base material becomes small. Also, because of the above-mentioned reason, the present embodiment can manufacture the glass base material having a substantially true circular shape cross-section.

The predetermined range of the outer diameter (d) of the porous-glass material 12 may be determined so that an eccentricity of a core inside the glass base material manufactured by sintering the porous-glass material 12 becomes 0.4 % or below.

Furthermore, the predetermined range of the outer diameter (d) of the porous-glass material may be determined based on a vertical length (L) of the heater 26. The predetermined range of the outer diameter (d) of the porous-glass material is preferably substantially $0.5 \times L \leqq d \leqq 0.9 \times L$.

If the outer diameter (d) of the porous-glass material 12 is smaller than $d = 0.5 \times L$, then the transmission of heat inside the porous-glass material 12 in the axial direction of the porous-glass material 12 does not become enough. Therefore, the vitrification of the porous-glass material 12 in the core part of the porous-glass material 12 does not become enough. Thus, the eccentricity of core in the glass base material increases.

On the other hand, if the outer diameter (d) of the porous-glass material 12 is larger than d = 0.9×L, the size of the heating unit 24 that includes the heater 26, insulation material, and a cooling unit becomes too large so that the cost taken for the heating unit 24 increases.

Therefore, the porous-glass material 12 is selected such that the porous-glass material 12 has an outer diameter (d), which is within a predetermined range substantially $0.5 \times L \leqq d \leqq 0.9$ XL.

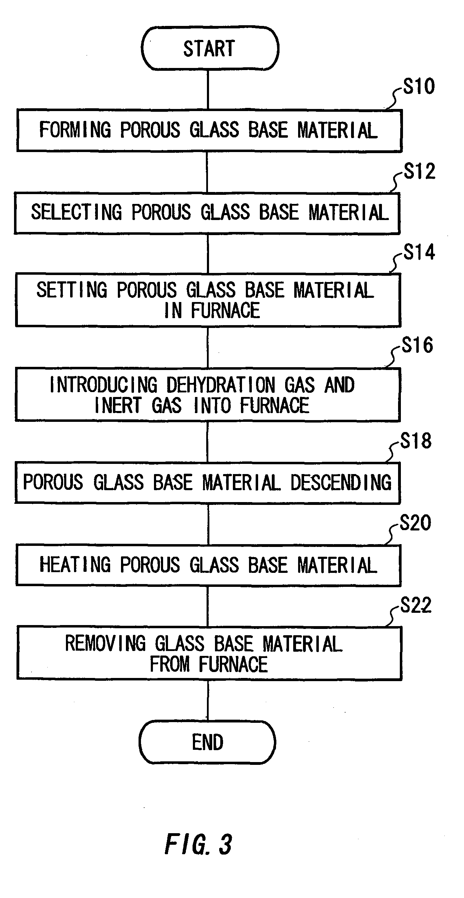

Fig. 3 shows a flowchart for manufacturing a glass base material of the present embodiment. First, a porous-glass material 12 is formed by such as VAD (vapor-phase Axial Deposition) method, or OCVD (Outside Chemical Vapor Deposition) method (S10). Then, the porous-glass material 12 having an outer diameter that is within a predetermined range is selected (S12) as explained in Fig. 2.

If the porous-glass material 12 having an outer diameter that is within a predetermined range is previously formed in the step of forming the porous-glass material (S10), the step of selecting the porous-glass material 12 (S12) can be abbreviated.

Next, the porous-glass material 12 is set inside the furnace 18 (S14). To set the porous-glass material 12 inside the furnace 18, the cover 16 of the furnace 18 is removed from the furnace 18. Then, the porous-glass material 12, an upper end of which is connected to the axis rod 14 is installed inside the furnace 18. Next, the cover 16 is set on the top of the furnace 18 so that the axis rod 14 passes through the opening provided on the central part of the cover 16.

Next, dehydration gas and inert gas are introduced into the furnace 18 fromthegas-introducingpipe 30 (S16). Thus, the inside of the furnace 18 is filled with the dehydration gas and inert gas.

Then, the porous-glass material 12 is rotated by the motor 20 and gradually descends downward to the bottom part of the furnace 18 (S18). The descending speed controller 22 controls the descending speed of the porous-glass material 12 by controlling the motor 20.

The porous-glass material 12 is heated by the heater 26 during passing through the opening of the heater 26 while descending downward to the bottom part of the furnace 18 (S20). The temperature controller 28 controls the temperature of the heater 26 during heating the porous-glass material 12.

The porous-glass material 12 is dehydrated and vitrified to be a transparent glass base material by the sintering process explained above.

Finally, the cover 16 is removed from the top of the furnace 18, and the sintered porous-glass material 12, which is a glass base material, is removed from the furnace 18.

(EXAMPLE 1)

A porous-glass material 12 having an outer diameter of 300 mm and a length of 3000 mm was vitrified using the sintering apparatus as shown in Fig. 1.

First, a core and a clad formed around the core were formed by the VAD (Vapor-phase Axial Deposition) method. A porous-glass material 12 was manufactured by further accumulating a clad around the outside surface of a clad, which was formed by the VAD method, or by the OCVD (Outside Chemical Vapor Deposition) method.

Next, the porous-glass material 12 was set inside the furnace 18 and descended inside the furnace 18. The inner diameter, shown by "X" in Fig. 1, of the furnace 18 was 340 mm. The thickness, shown by "T" in Fig. 1, of the sidewall of the furnace 18 was 5 mm. The inner diameter (D) of the opening of the heater 26 was 400 mm, and the vertical length (L) of the heater 26 was 400 mm. Therefore, the ratio (d/D) between the outer diameter (d) of the porous-glass material 12 and the inner diameter (D) of the opening of the heater 26 was 0.75. Also, the ratio (d/L) between the outer diameter (d) of the porous-glass material 12 and the vertical length (L) of the heater 26 was 0.75.

Next, mixed gas of chlorine gas, which is a dehydration gas, and helium gas is introduced inside the furnace 18 from the gas-introducing pipe 30 with a flow rate of 10 L/min. The volume of the chlorine gas occupies 30 Volume % in the total volume of the mixed gas. Then, the porous-glass material 12 is rotated and descended inside the furnace 18 with a descending speed of 1.2 mm/min. The descending speed controller 22 controls the rotation speed of the motor 20. The temperature controller 28 controls the temperature of the heater 26 to be 1600°C by a proportional-plus-derivative operation of the temperature controller 28.

When the porous-glass material 12 is descended to the predetermined vertical position, which is about 50 % of the total descending stroke of the porous-glass material 12, the descending speed of the porous-glass material 12 is increased to 2.0 mm/min. Furthermore, when the porous-glass material 12 is descended to another predetermined vertical position, which is about 75 % of the total descending stroke of the porous-glass material 12, the descending speed of the porous-glass material 12 is further increased to 3.0 mm/min. At this time, the temperature of the heater 26 is increased to 1630 °C. By sintering the porous-glass material 12, the glass base material was manufactured.

The surface of the glass base material manufactured by the above-mentioned process was grinded cylindrically. Then, a preform was manufactured by elongating the glass base material so that the outer diameter of the elongated glass base material became 60 mm$\phi$ using an electric furnace. Then, optical fiber was manufactured by drawing the preform in a fiber shape using a drawing apparatus. The diameter of the optical fiber drawn from the preform was 125 $\mu$m.

The eccentricity of the core was measured using an optical fiber structure measuring apparatus of a Model 2400 manufactured by Photon Kinetics Inc.

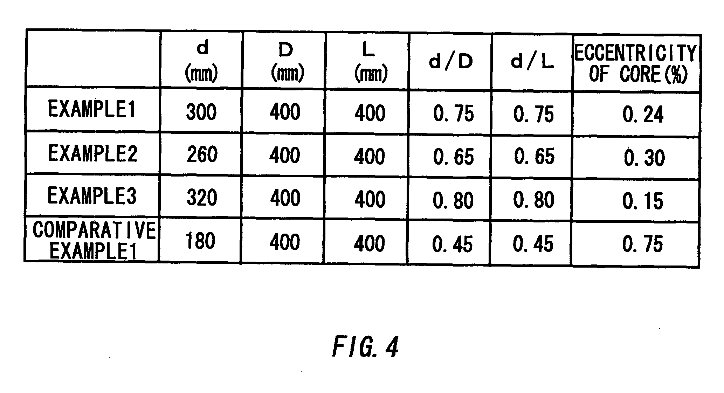

The measuring result of the eccentricity is shown in Fig. 4. As shown in Fig. 4, the eccentricity of the core of the optical fiber manufactured from a glass base material of Example 1 was below 0.30 %, which was below a permissible value of 0.4 %.

Because the ratio (d/D) between the outer diameter (d) of the porous-glass material 12 and the inner diameter (D) of the opening of the heater 26 was 0.75, which is between 0.5 and 0.9, the eccentricity of the core was below 0.30%.

Furthermore, because the ratio (d/L) between the outer diameter (d) of the porous-glass material 12 and the vertical length (L) of the heater 26 was 0.75, which is between 0.5 and 0.9, the eccentricity of the core was below 0.30%.

(EXAMPLE 2)

A porous-glass material 12 was dehydrated and sintered using the same method and the same sintering apparatus as explained in EXAMPLE 1 except the outer diameter of the porous-glass material 12 of EXAMPLE 2 was 260 mm.

The eccentricity of the core was measured using an optical fiber structure measuring apparatus of a Model 2400 manufactured by Photon Kinetics Inc as in EXAMPLE 1.

The measuring result is shown in Fig. 4. As shown in Fig. 4, the eccentricity of the core of the optical fiber manufactured from a glass base material of Example 2 was 0.30 %, which was below a permissible value of 0.4 %.

Because the ratio (d/D) between the outer diameter (d) of the porous-glass material 12 and the inner diameter (D) of the opening of the heater 26 was 0.65, which is between 0.5 and 0.9, the eccentricity of the core was 0.30%.

Furthermore, because the ratio (d/L) between the outer diameter (d) of the porous-glass material 12 and the vertical length (L) of the heater 26 was 0.65, which is between 0.5 and 0.9, the eccentricity of the core was 0.30%.

(EXAMPLE 3)

A porous-glass material 12 was dehydrated and sintered using the same method and the same sintering apparatus as explained in EXAMPLE 1 except the outer diameter of the porous-glass material 12 of EXAMPLE 2 was 320 mm.

The eccentricity of the core was measured using an optical fiber structure measuring apparatus of a Model 2400 manufactured by Photon Kinetics Inc as in EXAMPLE 1.

The measuring result is shown in Fig. 4. As shown in Fig. 4, the eccentricity of the core of the optical fiber manufactured from a glass base material of Example 2 was 0.15 %, which was below a permissible value of 0.4 %.

Because the ratio (d/D) between the outer diameter (d) of the porous-glass material 12 and the inner diameter (D) of the opening of the heater 26 was 0.80, which is between 0.5 and 0.9, the eccentricity of the core was below 0.30%.

Furthermore, because the ratio (d/L) between the outer diameter (d) of the porous-glass material 12 and the vertical length (L) of the heater 26 was 0.80, which is between 0.5 and 0.9, the eccentricity of the core was below 0.30%.

(COMPARATIVE EXAMPLE 1)

A porous-glass material 12 was dehydrated and sintered using the same method and the same sintering apparatus as explained in EXAMPLE 1 except the outer diameter of the porous-glass material 12 of COMPARATIVE EXAMPLE 1 was 180 mm.

The eccentricity of the core was measured using an optical fiber structure measuring apparatus of a Model 2400 manufactured by Photon Kinetics Inc as in EXAMPLE 1.

The measuring result is shown in Fig. 4. As shown in Fig. 4, the eccentricity of the core of the optical fiber manufactured from a glass base material of Example 2 was 0.75 %, which surpasses the permissible value of 0.4%.

Because the ratio (d/D) between the outer diameter (d) of the porous-glass material 12 and the inner diameter (D) of the opening of the heater 26 was 0.45, which is below 0.5, the eccentricity of the core became 0.75 %.

Furthermore, because the ratio (d/L) between the outer diameter (d) of the porous-glass material 12 and the vertical length (L) of the heater 26 was 0.45, which is below 0.5, the eccentricity of the core became 0.75 %.

As shown in Fig. 4, the eccentricity of the core becomes a permissible value of 0.4 % or below when the outer diameter (d) of the porous-glass material is within the predetermined range, which is substantially $0.5 \times D \leqq d \leqq 0.9 \times D$.

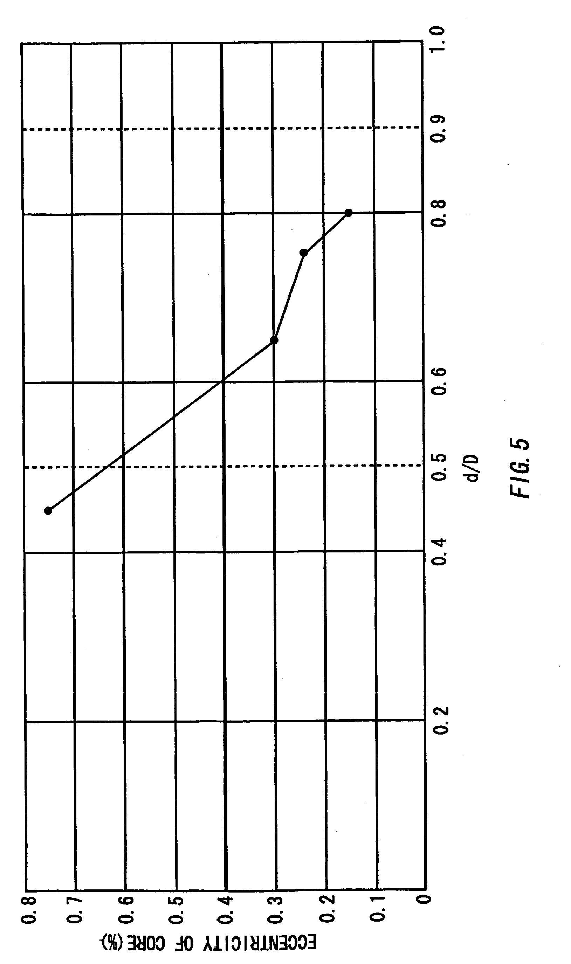

Fig. 5 shows the relationship between the eccentricity of a core and a ratio (d/D) between the outer diameter (d) of a porous-glass material 12 and an inner diameter (D) of the opening of the heater 26 for each of EXAMPLE 1, EXAMPLE 2, EXAMPLE 3, and COMPARATIVE EXAMPLE 1.

As shown in Fig. 5, the eccentricity of the core becomes a permissible value of 0.4 % or below when the outer diameter (d) of the porous-glass material is within the predetermined range, which is substantially $0.6 \times D \leqq d \leqq 0.8 \times D$ where the D is an inner diameter of the opening of the heater 26.

Thus, it is clear from Fig. 5 that there is a strong relationship between the eccentricity of a core and a ratio (d/D) between the outer diameter (d) of a porous-glass material 12 and an inner diameter (D) of the opening of the heater 26. Therefore, the present embodiment can manufacture a glass base material having a low eccentricity by selecting the porous-glass material 12 having the outer diameter (d) within a predetermined range before sintering the porous-glass material 12.

As explained above, the present embodiment can manufacture a glass base material having a low eccentricity of a core, the value of which is 0.4 % or below. The present embodiment can sinter the porous-glass material while reducing the eccentricity of a core even if the swinging and rotating phenomenon occurs during the sintering process. Furthermore, the present embodiment can manufacture a glass base material, the cross section of which has a true circular shape even if the swinging and rotating phenomenon occurs during the sintering process. Therefore, the present embodiment can increase the yield factor for manufacturing a preform and an optical fiber without reducing the productivity of a plant.

Furthermore, the present embodiment can be used not only for dehydration, sintering, and the vitrification of the porous-glass material 12 manufactured by the OVD method but also for dehydration, sintering, and the vitrification of the porous-glass material 12 manufactured by the VAD method.

**Claims**

1. A method for sintering a porous-glass material (12) to form a glass base material, which is a base material for an optical fiber, comprising:

   • preparing a ring heater (26) having an opening, through which said porous-glass material (12) passes, for heating said porous-glass material (12) and
   • selecting or forming said porous-glass material (12), followed by
   • heating said porous-glass material (12) in an atmosphere of dehydration gas and inert gas with said ring heater (26), said heating being carried out in a muffle tube (18) that is provided inside said opening of said ring heater (26) so that a part of said muffle tube (18) is surrounded by said ring heater (26),

   **characterized in that**
   said porous-glass material is selected or formed having an outer diameter d within a range which is determined based on an inner diameter D of said opening of said ring heater (26) and on a vertical length L of said ring heater (26) so that $0.5 \times D \leqq d \leqq 0.9 \times D$ and $0.5 \times L \leqq d \leqq 0.9 \times L$.

2. A method as claimed in claim 2, **characterized in that** said range of said outer diameter (d) of said porous-glass material (12) is determined so that $0.6 \times D \leqq d \leqq 0.8 \times D$.

3. A method as claimed in claim 1, **characterized in that** said predetermined range of said outer diameter (d) of said porous-glass material (12) is determined so that an eccentricity of a core inside said glass base material manufactured by sintering said porous-glass material (12) becomes substantially 0.4 % or below.

4. A method for manufacturing a preform, which is a base material of an optical fiber, comprising a method according to one of the claims 1 to 3, **characterized in that** the method further comprises elongating said porous-glass material (12) after sintering it by said heating to form said preform.

5. A method for manufacturing an optical fiber, comprising a method according to claim 4, **characterized in that** the method further comprises drawing said preform to form said optical fiber.

**Patentansprüche**

1. Verfahren zum Sintern eines porösen Glasmaterials (12), um ein Glasbasismaterial zu bilden, das ein Basismaterial für eine optische Faser ist, welches aufweist:

   • Vorsehen einer Ringheizvorrichtung (26) mit einer Öffnung, durch die das poröse Glasmaterial (12) hindurchgeht, um das poröse Glasmaterial (12) zu erwärmen, und
   • Auswählen oder Bilden des porösen Glasmaterials (12), gefolgt von
   • Erwärmen des porösen Glasmaterials (12) in einer Atmosphäre aus Dehydratisierungsgas und inertem Gas durch die Ringheizvorrichtung (26), wobei das Erwärmen in einem Muffelrohr (18) durchgeführt wird, das innerhalb der Öffnung der Ringheizvorrichtung (26) so vorgesehen ist, dass ein Teil des Muffelrohrs (18) von der Ringheizvorrichtung (26) umgeben wird,

   **dadurch gekennzeichnet, dass**
   das poröse Glasmaterial so ausgewählt oder gebildet ist, dass es einen Außendurchmesser d innerhalb eines Bereichs hat, der bestimmt ist auf der Grundlage eines Innendurchmessers D der Öffnung der Ringheizvorrichtung (26) und einer vertikalen Länge L der Ringheizvorrichtung (26) derart, dass $0,5 \times D \leqq d \leqq 0,9 \times D$ und $0,5 \times L \leqq d \leqq 0,9 \times L$ sind.

2. Verfahren nach Anspruch 1, **dadurch gekenn-**

**zeichnet, dass** der Bereich des Außendurchmessers (d) des porösen Glasmaterials (12) so bestimmt ist, dass $0,6 \times D \leqq d \leqq 0,8 \times D$ ist.

3. Verfahren nach Anspruch 1, **dadurch gekennzeichnet, dass** der vorbestimmte Bereich des Außendurchmessers (d) des porösen Glasmaterials (12) so bestimmt ist, dass eine Exzentrizität eines Kerns innerhalb des durch Sintern des porösen Glasmaterials (12) hergestellten Glasbasismaterials im Wesentlichen 0,4% oder weniger wird.

4. Verfahren zum Herstellen eines Vorformlings, der ein Basismaterial für eine optische Faser ist, aufweisend ein Verfahren nach einem der Ansprüche 1 bis 3, **dadurch gekennzeichnet, dass** das Verfahren weiterhin ein Verlängern des porösen Glasmaterials (12) nach dem Sintern von diesem durch das Erwärmen zur Bildung des Vorformlings aufweist.

5. Verfahren zum Herstellen einer optischen Faser, aufweisend ein Verfahren nach Anspruch 4, **dadurch gekennzeichnet, dass** das Verfahren weiterhin das Ziehen des Vorformlings zur Bildung der optischen Faser aufweist.

**Revendications**

1. Procédé de frittage d'un matériau de verre poreux (12) pour former un matériau de base de verre, qui est un matériau de base pour une fibre optique, comprenant les étapes consistant à :

   • préparer un élément chauffant en anneau (26) ayant une ouverture à travers laquelle ledit matériau de verre poreux (12) passe, pour chauffer ledit matériau de verre poreux (12), et
   • sélectionner ou former ledit matériau de verre poreux (12), puis
   • chauffer ledit matériau de verre poreux (12) dans une atmosphère de gaz de déshydratation et de gaz inerte avec ledit élément chauffant en anneau (26), ledit chauffage étant réalisé dans un tube à moufle (18) qui est disposé à l'intérieur de ladite ouverture dudit élément chauffant en anneau (26) de sorte qu'une partie dudit tube à moufle (18) est entourée par ledit élément chauffant en anneau (26),

   **caractérisé en ce que**
   ledit matériau de verre poreux est sélectionné ou formé pour avoir un diamètre externe d dans une plage qui est déterminée d'après un diamètre interne D de ladite ouverture dudit élément chauffant en anneau (26) et une longueur verticale L dudit élément chauffant en anneau (26) de sorte que $0,5 \times D \leqq d \leqq 0,9 \times D$ et $0,5 \times L \leqq d \leqq 0,9 \times L$.

2. Procédé selon la revendication 2, **caractérisé en ce que** ladite plage dudit diamètre externe (d) dudit matériau de verre poreux (12) est déterminée de sorte que

$$0,6 \times D \ \leq \ d \ \leq \ 0,8 \times D.$$

3. Procédé selon la revendication 1, **caractérisé en ce que** ladite plage prédéterminée dudit diamètre externe (d) dudit matériau de verre poreux (12) est déterminée de sorte qu'une excentricité d'un coeur à l'intérieur dudit matériau de base de verre fabriqué par frittage dudit matériau de verre poreux (12) devient sensiblement de 0,4 % ou moins.

4. Procédé de fabrication d'une préforme, qui est un matériau de base d'une fibre optique, comprenant un procédé selon l'une des revendications 1 à 3, **caractérisé en ce que** le procédé comprend en outre l'allongement dudit matériau de verre poreux (12) après son frittage par ledit chauffage pour former ladite préforme.

5. Procédé de fabrication d'une fibre optique, comprenant un procédé selon la revendication 4, **caractérisé en ce que** le procédé comprend en outre l'étirage de ladite préforme pour former ladite fibre optique.

*FIG. 1*

**FIG. 2**

START

FORMING POROUS GLASS BASE MATERIAL ⟋S10

SELECTING POROUS GLASS BASE MATERIAL ⟋S12

SETTING POROUS GLASS BASE MATERIAL IN FURNACE ⟋S14

INTRODUCING DEHYDRATION GAS AND INERT GAS INTO FURNACE ⟋S16

POROUS GLASS BASE MATERIAL DESCENDING ⟋S18

HEATING POROUS GLASS BASE MATERIAL ⟋S20

REMOVING GLASS BASE MATERIAL FROM FURNACE ⟋S22

END

*FIG. 3*

| | d (mm) | D (mm) | L (mm) | d/D | d/L | ECCENTRICITY OF CORE (%) |
|---|---|---|---|---|---|---|
| EXAMPLE1 | 300 | 400 | 400 | 0.75 | 0.75 | 0.24 |
| EXAMPLE2 | 260 | 400 | 400 | 0.65 | 0.65 | 0.30 |
| EXAMPLE3 | 320 | 400 | 400 | 0.80 | 0.80 | 0.15 |
| COMPARATIVE EXAMPLE1 | 180 | 400 | 400 | 0.45 | 0.45 | 0.75 |

FIG. 4

*FIG. 5*

EP 1 207 139 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1035082 A1